# EUROPÄISCHE PATENTSCHRIFT

(11) **EP 1 334 337 B1**
(45) Veröffentlichungstag und Bekanntmachung des Hinweises auf die Patenterteilung: **08.07.2009**
(21) Anmeldenummer: 01996721.5
(22) Anmeldetag: 13.11.2001
(51) Int. Cl.: G01F 23/296

(54) **VERFAHREN UND ANORDNUNG ZUR FÜLLSTANDSMESSUNG**
METHOD AND SYSTEM FOR MEASURING LEVELS
PROCEDE ET DISPOSITIF DE MESURE DE NIVEAU

(30) Priorität: 14.11.2000 DE 10056353
(43) Veröffentlichungstag der Anmeldung: 13.08.2003
(73) Patentinhaber: VEGA Grieshaber KG, 77709 Wolfach (DE)
(72) Erfinder: RAFFALT, Felix, 77756 Hausach (DE); FRICK, Adrian, 77709 Wolfach (DE)
(74) Vertreter: Westphal, Klaus
(86) Internationale Anmeldenummer: PCT/EP2001/013106
(87) Internationale Veröffentlichungsnummer: WO 2002/040950

(56) Entgegenhaltungen:
- DE-A- 4 232 659
- DE-A- 19 720 519
- US-A- 5 895 848

## Beschreibung

Die Erfindung betrifft ein Verfahren zur Füllstandsmessung mittels einer von einer Erregerschaltung zu Schwingungen angeregten Schwinggabel, der ein Kennelement zugeordnet ist gemäß den Merkmalen des Oberbegriffs des Anspruchs 1.

Die Erfindung betrifft eine Anordnung zur Füllstandsmessung mittels einer von einer Erregerschaltung zu Schwingungen angeregten Schwinggabel, der ein Kennelement zugeordnet ist gemäß den Merkmalen des Oberbegriffs des Anspruchs 9.

Schwinggabeln, wie sie beispielsweise zur Füllstandsmessung eingesetzt werden, weisen fertigungsbedingt aufgrund von Guss- und Bearbeitungstoleranzen Streuung bei ihrer Resonanzfrequenz auf. Die sie auswertende Elektronikschaltung muss durch geeignete Massnahmen an diese Frequenzstreuungen angepasst werden.

Ein erster Stand der Technik hierzu ist in DE 42 32 659 beschrieben. Der Schwinggabel wird dort ein Kennelement zugeordnet, welches der Frequenzauswertestufe der Sensorelektronik codiert den Wert der Schwinggabelfrequenz mitteilt. Die Frequenzauswertestufe passt ihren Schaltpunkt dem codierten Wert an, so dass trotz unterschiedlicher Schwinggabelgrundfre-quenzen alle Sensoren die gleiche Füllstandansprechhöhe aufweisen.

Ein zweiter Stand der Technik hierzu ist in DE 198 24 370 A1 beschrieben. Der Schwinggabel werden dort zwei Kennelemente zugeordnet, welche in der Sensorelektronik jeweils ein Referenz-Band-Filter verstellen, welches anstelle der Schwinggabel in den Rückkoppeloszillatorkreis geschaltet wird. Die erzeugten Referenzfrequenzen werden zu dem Auswertegerät über-tragen, welches seinen Frequenzschaltpunkt dem übertragenen Referenzwert anpasst, so dass sich trotz unterschiedlicher Schwinggabelgrundfrequenzen stets die gleiche Füllstandansprechhöhe ergibt.

Nachteilig an beiden Verfahren ist, dass zwar die Frequenzauswertestufe an die Schwinggabelfertigungstoleranz angepasst wird, der Rückkoppeloszillator jedoch, welcher der Erregung der Schwinggabel dient, keine Anpassung erfährt.

In der Praxis wird daher bisher das im Rückkoppeloszillator enthaltene Grundwellenbandfilter in seinem Frequenzgang so breit ausgelegt, dass es die Grundfrequenzen aller im gegebenen Fertigungstoleranzbereich liegender Schwinggabeln ab-deckt.

Dies führt jedoch zu Problemen bei stark verkleinerten Schwinggabeln von beispielsweise nur noch 40mm Gabelzinkenlänge. Derart kurze Schwinggabeln stellen aufgrund ihrer schlechteren schwingmechanischen Eigenschaften höhere Anforderungen an den Rückkoppeloszillator. Bei zu breiter Auslegung des Grundwellenbandfilters treten Anschwingprobleme der Gabel beim Einschalten der Stromversorgung auf, bei enger Auslegung wird bei Schwinggabelgrundfrequenzwerten am oberen bzw. unteren Ende des Streubereichs die Schwingfrequenz der Gabel durch den Rückkoppeloszillator zu stark verzogen, so dass eine Erregung neben deren Resonanzfrequenz erzwungen wird. Dies hat zur Folge, dass je nach Toleranzwert der Gabel ggf. die Ausgabe der Füllstandvollmeldung bzw. -leermeldung verhindert wird.

Die geschilderten Probleme treten insbesondere bei aus Korrosionsschutzgründen mit Kunststoff oder Email beschichteten Schwinggabeln auf sowie bei Gabeln mit hochglanzpolierter Oberfläche für Lebensmittelanwendungen. Derartige Gabeln verfügen neben grösseren Streubereichen bei ihrer Grundfrequenz häufig durch den Beschichtungs- bzw. Polierprozess bedingt über eine asymmetrische Massenverteilung zwischen den Gabelzinken. Ebenso stellen Schwinggabeln für Hochtemperaturanwendungen erhöhte Anforderungen an den Rückkoppeloszillator, um den gesamten Temperaturbereich mit gleichbleibenden Messeigenschaften abdecken zu können.

Aufgabe des erfindungsgemäßen Verfahrens ist es, eine Anordnung zu schaffen, welche es mit elektronischen Mitteln gestattet, die gegebenen mechanischen Toleranzen zu kompensieren.

Verfahrensmäßig wird diese Aufgabe mit den Merkmalen des Anspruchs 1 gelöst.

Vorrichtungsmäßig wird diese Aufgabe mit den Merkmalen des Anspruchs 9 gelöst.

Die Erfindung wird nachfolgend näher erläutert. Es zeigen:
- Figur 1: ein Blockschaltbild des erfindungsgemäßen Verfahrens,
- Figur 2: ein Schaltbild einer ersten Ausführungsform und
- Figur 3: ein Schaltbild einer zweiten Ausführungsform.

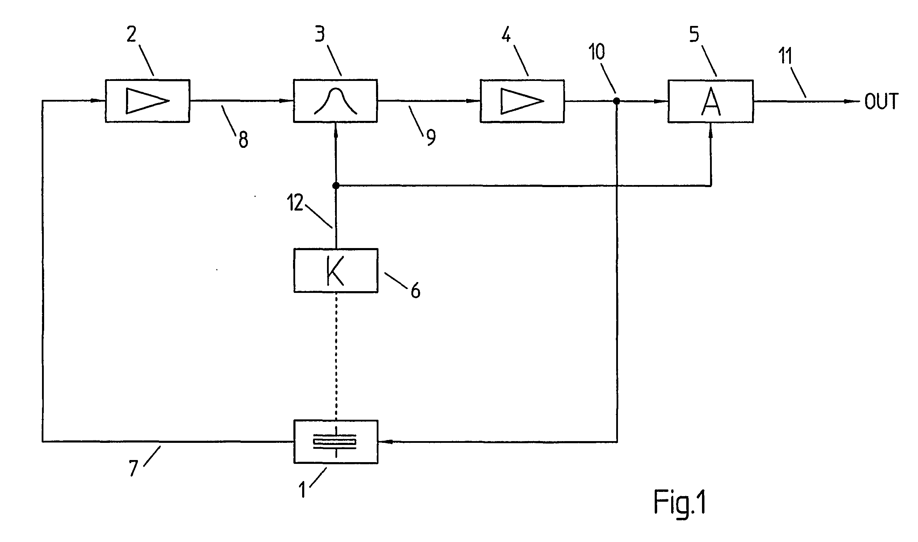

Das in Figur 1 dargestellte Blockschaltbild zeigt einen Schwinggabelfüllstandsensor in vereinfachter Darstellung. Das von der Schwinggabel 1 erzeugte Schwingungsdetektionssignal 7 wird dem Eingangsverstärker 2 zugeführt, welcher mit seinem Ausgang das Bandfilters 3 ansteuert. Das Bandfilter 3 dient dazu, dass die Schwinggabel 1 nur in ihrem Grundschwingungsmode erregt wird, Frequenzen von Oberwellenschwingungen werden vom Bandfilter 3 unterdrückt. Das Filterausgangssignal 9 steuert den Endverstärker 4 an, dessen Ausgangsspannung 10 zur Schwingungserregung der Schwinggabel 1 verwendet wird. Die Elemente 1,2,3,4 stellen auf diese Weise einen selbsttätig schwingenden, rückgekoppelten Schwingkreis dar. Das frequenzbestimmende Element ist die Schwinggabel 1, die Komponenten 2,3,4 bilden den Rückkoppeloszillator.

Das Signal 10 dient zusätzlich der Ansteuerung der Frequenzauswertestufe 5. Sie generiert an ihrem Ausgang 11 je nach Frequenz des Signals 10 eine Leer-, Voll- oder Störmeldung.

Der Schwinggabel ist räumlich ein Kennelement 6 zugeordnet. Es enthält codiert den individuellen Wert der Grundfrequenz der Schwinggabel 1. Das Kennelement 6 kann analoger Natur sein, z. B. ein Widerstand oder Kondensator bestimmten Wertes oder es kann digitaler Natur sein, z. B. ein binärcodierter Schalter oder ein Halbleiterspeicher.

Das Kennelement 6 ist mit seiner Anschlussleitung 12 mit dem Bandfilter 3 verbunden und wirkt auf dieses in der Weise ein, dass es dessen Frequenzgang in Abhängigkeit seines codierten Wertes definiert. Die Durchlasskennlinie des Bandfilters 3 wird nach Massgabe des Kennelementes 6 auf den Wert eingestellt, welcher für den Betrieb der Schwinggabel 1 auf ihrer tatsächlichen Resonanzfrequenz am günstigsten ist. Das Bandfilter 3 muss auf diese Weise nicht eine Vielzahl unterschiedlicher Schwinggabeln abdecken, sondern ist in seinem Frequenz-gang auf die jeweils angeschlossene Schwinggabel optimiert.

Die Frequenzauswertestufe 5 wird vorzugsweise ebenfalls mit dem gleichen Kennelement 6 verbunden und dadurch deren Frequenzschaltschwellen der Schwinggabel 1 angepasst.

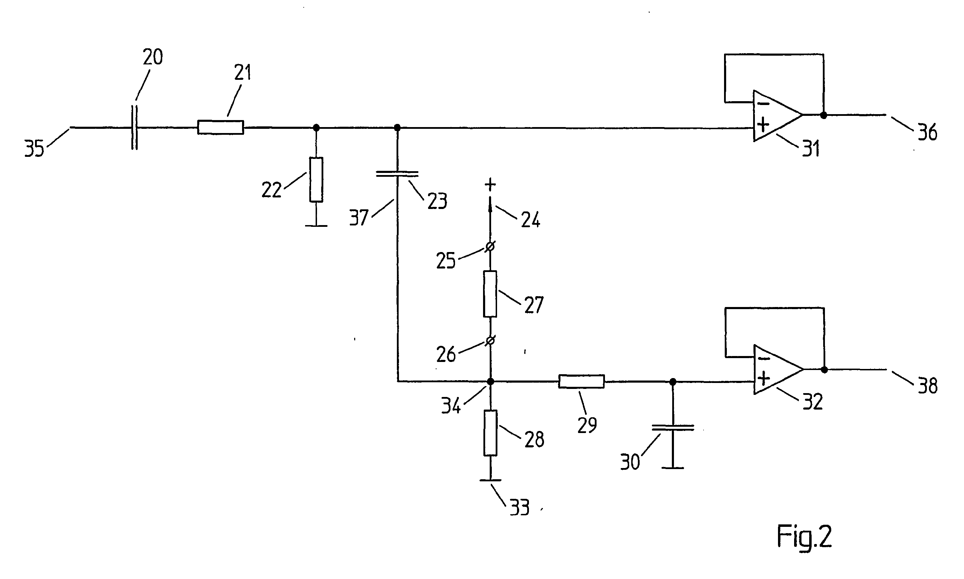

Das Bandfilter 3 und die Frequenzauswertestufe 5 sind hierzu technisch derart gestaltet, dass sie beide mittels gleicher Leitung 12 das Kennelement 6 kontaktieren, ohne dass eine gegenseitige Beeinflussung der Stufen 3 und 5 stattfindet. Figur 2 zeigt ein erstes Ausführungsbeispiel der Auswertung des Kennelementes 6.

Das Kennelement 6 ist als Widerstand 27 ausgeführt, der mittels Klemmen 25, 26 mit einem Schaltungsausschnitt des Bandfilters 3 und der Frequenzauswertestufe 5 verbunden ist. Der Widerstand 27 bildet mit einem Widerstand 28 einen zwischen Pluspotential 24 und Masse 33 liegenden Spannungsteiler. Ändert sich der Widerstand 27, so ändert sich sowohl das Spannungspotential als auch die Impedanz am Punkt 34.
Die Bauelemente 20,21,22,23 bilden einen Bandpass und stellen einen Abschnitt des Bandfilters 3 dar. An Punkt 35 wird das zu filternde Signal zugeführt und an Punkt 36 das gefilterte Signal wieder abgegriffen. Der Operationsverstärker 21 dient als Impedanzwandler, um einen Einfluß nachfolgender Stufen auf den Filterabschnitt zu verhindern. Der frequenzbestimmende Kondensator 23 ist mit seinem einen Anschluß 37 nicht wie üblich mit Schaltungsmasse verbunden, sondern mit der vom Widerstandes 27 bestimmten Frequenz am Punkt 34 verbunden. Der Frequenzgang des Filterabschnittes 20,21,22,23 kann auf diese Weise mittels des Widerstandes 27 verstellt werden.

Das am Punkt 34 anstehende Gleichspannungspotential wird mittels des Tiefpasses 29, 30 von der mittels des Kondensators 23 eingekoppelten Wechselspannungskomponente befreit und steht nach Impedanzwandlung durch den Operationsverstärker 32 als vom Widerstand 27 definerte Gleichspannung 38 zur Schaltpunktverstellung der Frequenzauswertestufe 5 zur Verfügung.

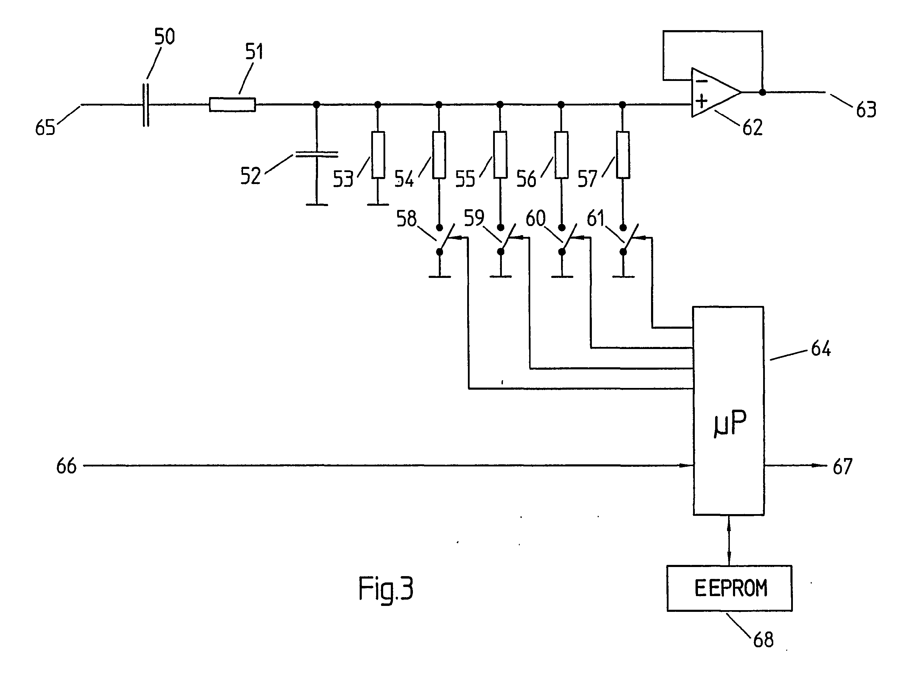

Figur 3 zeigt ein zweites Ausführungsbeispiel der Auswertung des Kennelementes 6.

Das Kennelement 6 ist als EEPROM- Halbleiterspeicher 68 ausgeführt und wird mittels eines Mikroprozessors 64 ausgelesen. Die Bauelemente 50,51,52,53 bilden einen Bandpass, welcher durch Zuschalten der Widerstände 54,55,56,57 mittels der Halbleiterschalter 58,59,60,61 in seinem Frequenzgang steuerbar ist. Der Mikroprozessor 64 schaltet in Abhängigkeit des Speicherinhaltes von EEPROM 68 die Halbleiterschalter 58 bis 61 ein. An Punkt 63 wird das mittels des Operationsverstärkers 62 impedanzgewandelte Bandfilterausgangssignal abgegriffen.

Die Funktion der Frequenzauswertestufe 5 wird im Mikroprozessor 64 ausgeführt, dessen Eingang 66 das Signal 10 zugeführt wird. Am Ausgang 67 steht das Signal 11 an. Der Wert der Frequenzschaltschwellen wird vom Mikroprozessor 64 anhand des Speicherinhaltes von EEPROM 68 errechnet.

Das erfindungsgemäße Verfahren eignet sich ausser für Schwinggabeln auch für Schwingstäbe und sonstige mechanisch schwingende Sensoren.

Neben dem Frequenzgang des Rückkoppeloszillators kann auch dessen Phasengang und Verstärkungsfaktor mittels des Kennelementes 6 verstellt werden, um einen Betrieb des Schwingelementes 1 im optimalen Arbeitspunkt zu erzielen.

Neben der Anwendung auf rückgekoppelte geschlossene Schwingkreise kann das erfindungsgemässe Verfahren auch bei nichtrückgekoppelten Strukturen eingesetzt werden. Das Kennelement 6 verstellt in diesem Fall den das Schwingelement 1 erregenden Generator hinsichtlich geeigneter Parameter wie Frequenz und Amplitude. Bei intermittierendem Betrieb kann das Kennelement 6 auch Daten über An- und Ausschwingzeit bzw. Schwingungsgüte des Schwingelementes 1 enthalten, um eine optimale Erregung und Auswertung der Schwingung zu gewährleisten.

Das Kennelement 6 kann auch Daten über mehrere Schwingmoden des Schwingelementes 1 enthalten, um die gezielte Erregung des gewünschten Modes zu verbessern oder einen Mehrmodenbetrieb des Sensors zu ermöglichen.

Das Kennelement 6 kann auch zur Speicherung allgemeiner Daten über den Vibrationssensor dienen, wie z. B. Beschichtungen, Sensorwerkstoffe, Temperaturbereich, Sensorlänge, Prozessanschlüsse, Seriennumer. Neben der Einstellung der Erreger- und Auswerteelektronik können diese Daten auch zu Visualisierungszwecken dienen, die Ausgabe über ein Feldbussystem ermöglicht beispielsweise die genaue Identifizierung des Sensortyps von der Leitwarte aus. Da das Kennelement 6 der Sensormechanik zugeordnet ist, bleiben bei einem Austausch der Elektronik alle Daten der Sensormechanik erhalten. Das Kennelement 6 kann zusätzlich zur redundanten Ablage von Sensoreinstellungen dienen. Bei Austausch der Elektronik kann dann die neue Elektronik die Einstellungen der alten defekten Elektronik selbsttätig übernehmen, indem die im Kennelement 6 abgelegten Daten ausgelesen werden.

## Patentansprüche

1. Verfahren zur Füllstandsmessung mittels eines von einer Erregerschaltung (2,3,4) zu Schwingungen angeregten, mechanisch schwingendem Schwingelement (1), dem ein Kennelement (6), welches codiert einen individuellen Wert der Grundfrequenz des Schwingelements (1) enthält, zugeordnet ist, wobei das das Schwingelement (1) zu Schwingungen anregende Ausgangsssignal der Erregerschaltung (2,3,4) einer Frequenzauswerteschaltung (5) zugeführt wird,
- **dadurch gekennzeichnet, daß** die Erregerschaltung (2, 3, 4) mit Hilfe des Kennelementes (6) in ihren Schaltungsparametern beeinflußbar ist.

2. Verfahren nach Anspruch 1, **dadurch gekennzeichnet, dass** die Erregerschaltung (2, 3, 4) als Rückkoppelozillator ausgebildet ist und einen Eingangsverstärker (2), ein Bandfilter (3) und einen Endverstärker (4) aufweist.

3. Verfahren nach Anspruch 2, **dadurch gekennzeichnet, dass** das Ausgangssignal des Endverstärkers (4) dem Eingang der Frequenzauswerteschaltung (5) und des Schwingelements (1) zugeführt wird, deren Ausgangssignal dem Eingang des Eingangsverstärkers (2) des Rückkoppeloszillators zugeführt wird.

4. Verfahren nach Anspruch 3, **dadurch gekennzeichnet, dass** das Ausgangssignal - die Grundfrequenz des Schwingelements (1) in codierter Form - des Kennelementes (6) dem Stelleingang des Bandfilters (3) und der Frequenzauswerteschaltung zugeführt wird.

5. Verfahren nach einem der Ansprüche 1 bis 4, **dadurch gekennzeichnet, daß** durch das Kennelement (6) eine Durchlasskennlinie des Bandfilters (3) beeinflußbar ist.

6. Verfahren nach Anspruch 1, **dadurch gekennzeichnet, dass** das Kennelement (6) als Widerstand (27) ausgeführt ist.

7. Verfahren nach einem der Ansprüche 1 bis 4, **dadurch gekennzeichnet, dass** das Kennelement (6) als Speicher (68) ausgeführt ist, der von einem Mikroprozessor (64) ausgelesen wird.

8. Verfahren nach Anspruch 7, **dadurch gekennzeichnet, dass** der Mikroprozessor (64) in Abhängigkeit des Speicherinhaltes des Speichers (68) einen Bandpass (50,51,52,53), der Bestandteil des Bandfilters (3) ist, derart ansteuert, dass der Mikroprozessor (64) steuerbare Schalter (58,59,60,61) ansteuert, die mehrere Widerstände (54,55,56,57) parallel zu einer Kapazität (52) des Bandpasses schalten.

9. Anordnung zur Füllstandsmessung mittels einem von einer Erregerschaltung (2,3,4) zu Schwingungen angeregten, mechanisch schwingenden Schwingelement (1), dem ein Kennelement (6), welches codiert einen individuellen Wert der Grundfrequenz des Schwingelements 1 enthält, zugeordnet ist, wobei der Ausgang der Erregerschaltung (2, 3, 4) mit dem Eingang einer Frequenzauswerteschaltung (5) verbunden ist, **dadurch gekennzeichnet, dass** die Erregerschaltung (2, 3, 4) mit Hilfe des Kennelementes (6) in ihren Schaltungsparametern beeinflußbar ist.

10. Anordnung nach Anspruch 9, **dadurch gekennzeichnet, dass** die Erregerschaltung (2, 3, 4) eine Reihenschaltung aus einem Eingangsverstärker (2), einem Bandfilter (3) und einem Endverstärker (4) aufweist.

11. Anordnung nach Anspruch 10, **dadurch gekennzeichnet, dass** der Ausgang des Kennelementes (6) mit einem Stelleingang des Bandfilters (3) verbunden ist.

12. Anordnung nach Anspruch 11, **dadurch gekennzeichnet, dass** das Kennelement (6) als Widerstand (27) ausgeführt ist, dessen Anschlüsse mit dem Bandfilter (3) verbunden sind.

13. Anordnung nach Anspruch 10, **dadurch gekennzeichnet, dass** das Kennelement (6) als Speicher (68) ausgeführt ist.

14. Anordnung nach Anspruch 13, **dadurch gekennzeichnet, dass** mehrere Widerstände (54,55,56,57) mittels steuerbarer Schalter (58,59,60,61) parallel zu einer Kapazität (52) eines Bandpasses schaltbar sind, der Bestandteil des Bandfilters (3) ist, dass die Steuerausgänge eines Mikroprozessors (64) mit den Steuereingängen der steuerbaren Schalter (58,59,60,61) verbunden sind und dass der Mikroprozessor (64) mit einem Speicher (68) verbunden ist, in welchem die Grundfrequenz des Schwingelements (1) gespeichert ist.

15. Verfahren nach Anspruch 7 oder 8 oder Anordnung nach Anspruch 12, **dadurch gekennzeichnet, dass** der Speicher ein EEPROM (68) ist.

16. Verfahren nach der Ansprüche 1 bis 8, **dadurch gekennzeichnet, dass** das Schwingelement (1) eine Schwinggabel oder ein Schwingstab ist.

17. Anordnung nach einem der Ansprüche 9 bis 14, **dadurch gekennzeichnet, dass** der Sensor (1) eine Schwinggabel oder ein Schwingstab ist.

## Claims

1. Method for level measuring by means of an oscillating element (1) that is excited to oscillate by an oscillator circuit (2, 3, 4), with an identifying element (6) which contains, coded, an individual value of the fundamental frequency of the oscillating element (1), being assigned to the oscillating element, and with the output signal of the oscillator circuit (2, 3, 4) which excites the oscillating element (1) to oscillate being fed to a frequency evaluation circuit (5), **characterized in that** the oscillator circuit (2, 3, 4) can be influenced in respect to its circuit parameters with the aid of the identifying element (6).

2. Method according to claim 1, **characterized in that** the oscillator circuit (2, 3, 4) is realized in the form of a regenerative oscillator and contains an input amplifier (2), a band filter (3) and an output amplifier (4).

3. Method according to claim 2, **characterized in that** the output signal of the output amplifier (4) is fed to the input of the frequency evaluation circuit (5) and to the oscillating element (1), the output signal of which is fed to the input of the input amplifier (2) of the regenerative oscillator.

4. Method according to claim 3, **characterized in that** the output signal - the fundamental frequency of the oscillating element (1) in coded form - of the identifying element (6) is fed to the control input of the band filter (3) and to the frequency evaluation circuit.

5. Method according to anyone of claims 1-4, **characterized in that** the transmission characteristic of the band filter (3) can be influenced by the identifying element (6).

6. Method according to claim 1, **characterized in that** the identifying element (6) is realized in the form of the resistor (27).

7. Method according to anyone of claims 1-4, **characterized in that** the identifying element (6) is realized in the form of a memory (68) that is read by a microprocessor (64).

8. Method according to claim 7, **characterized in that** the microprocessor (64) controls a band pass (50, 51, 52, 53) which forms part of the band filter (3) in dependence on the memory content of the memory (68), namely, in such a way that the microprocessor (64) controls switches (58, 59, 60, 61) that switch several resistors (54, 55, 56, 57) parallel to a capacitor (52) of the band pass.

9. Arrangement for level measuring by means of an oscillating element (1) that is excited to oscillate by means of an oscillator circuit (2, 3, 4), with an identifying element (6) being assigned to the oscillating element (1), and with the output of the oscillator circuit (2, 3, 4) being connected to the input of a frequency evaluation circuit (5), **characterized in that** the oscillator circuit (2, 3, 4) can be influenced in respect to its circuit parameters with the aid of the identifying element (6).

10. Arrangement according to claim 9, **characterized in that** the oscillator circuit (2, 3, 4) contains a series circuit consisting of an input amplifier (2), a band filter (3) and an output amplifier (4).

11. Arrangement according to claim 10, **characterized in that** the output of the identifying element (6) is connected to a control input of the band filter (3).

12. Arrangement according to claim 11, **characterized in that** the identifying element (6) is realized in the form of a resistor (27), the terminals of which are connected to the band filter (3).

13. Arrangement according to claim 10, **characterized in that** the identifying element (6) is realized in the form of a memory (68).

14. Arrangement according to claim 13, **characterized in that** several resistors (54, 55, 56, 57) can be switched parallel to a capacitor (52) of a band pass by means of controllable switches (58, 59, 60, 61), with said band pass forming part of the band filter (3), **in that** the control outputs of a microprocessor (64) are connected to the control inputs of the controllable switches (58, 59, 60, 61), and **in that** the microprocessor (64) is connected to a memory (68), in which the fundamental frequency of the oscillating element (1) is stored.

15. Method according to claim 7 or 8 or arrangement according to claim 12, **characterized in that** the memory consists of an EEPROM (68).

16. Method according to claims 1 to 8, **characterized in that** the oscillating element (1) consists of an oscillating fork or an oscillating rod.

17. Method according to anyone of claims 9 to 14, **characterized in that** the sensor (1) consists of an oscillating fork or an oscillating rod.

## Revendications

1. Procédé de mesure de niveau à l'aide d'un élément oscillant (1), à oscillation mécanique, excité par un circuit d'excitation (2, 3, 4), et auquel est associé un élément caractéristique (6) comportant de manière codée une valeur individuelle de la fréquence fondamentale de l'élément oscillant (1),
le signal de sortie du circuit d'excitation (2, 3, 4) excitant l'élément oscillant (1) pour générer des oscillations, est appliqué à un circuit d'exploitation de fréquence (5),
**caractérisé en ce que**
le circuit d'exploitation (2, 3, 4) est influencé dans ses paramètres de commutation par l'élément caractéristique (6).

2. Procédé selon la revendication 1,
**caractérisé en ce que**
le circuit d'exploitation (2, 3, 4) est un oscillateur à réaction et comporte un amplificateur d'entrée (2), un filtre passe-bande (3) et un amplificateur de puissance (4).

3. Procédé selon la revendication 2,
**caractérisé en ce que**
le signal de sortie de l'amplificateur de puissance (4) est appliqué à l'entrée du circuit d'exploitation de fréquence (5) et de l'élément oscillant (1) dont le signal de sortie est appliqué à l'entrée de l'amplificateur d'entrée (2) de l'oscillateur de réaction.

4. Procédé selon la revendication 3,
**caractérisé en ce que**
le signal de sortie - la fréquence fondamentale de l'élément oscillant (1) sous forme codée - de l'élément caractéristique (6) est appliqué à l'entrée de réglage du filtre passe-bande (3) et au circuit d'exploitation de fréquence.

5. Procédé selon les revendications 1 à 4,
**caractérisé en ce que**
l'élément caractéristique (6) est influencé par la caractéristique passante du filtre passe-bande (3).

6. Procédé selon la revendication 1,
**caractérisé en ce que**
l'élément caractéristique (6) est réalisé sous la forme d'une résistance (27).

7. Procédé selon les revendications 1 à 4,
**caractérisé en ce que**
l'élément caractéristique (6) est réalisé sous la forme d'une mémoire (68) lue par un microprocesseur (64).

8. Procédé selon la revendication 7,
**caractérisé en ce que**
le microprocesseur (64) est commandé en fonction du contenu de la mémoire (68) d'un filtre passe-bande (50, 51, 52, 53) faisant partie du filtre passe-bande (3) de façon que le microprocesseur (64) commande des commutateurs commandés (58, 59, 60, 61) qui commutent plusieurs résistances (54, 55, 56, 57) en parallèle à une capacité (52) du filtre passe-bande.

9. Dispositif de mesure de niveau à l'aide d'un élément oscillant (1), à oscillation mécanique, excité dans le sens de l'oscillation par un circuit d'excitation (2, 3, 4), et auquel est associé un élément caractéristique (6) qui reçoit de façon codée une valeur individuelle de la fréquence fondamentale de l'élément oscillant (1),
la sortie du circuit d'exploitation (2, 3, 4) étant reliée à l'entrée d'un circuit d'exploitation de fréquence (5),
**caractérisé en ce que**
le circuit d'exploitation (2, 3, 4) est influencé dans ses paramètres de commutation par l'élément caractéristique (6).

10. Dispositif selon la revendication 9,
**caractérisé en ce que**
le circuit d'exploitation (2, 3, 4) comporte un montage en série formé d'un amplificateur d'entrée (2), d'un filtre passe-bande (3) et d'un amplificateur de puissance (4).

11. Dispositif selon la revendication 10,
**caractérisé en ce que**
la sortie de l'élément caractéristique (6) est reliée à l'entrée de réglage du filtre passe-bande (3).

12. Dispositif selon la revendication 11,
**caractérisé en ce que**
l'élément caractéristique (6) est une résistance (27) dont les branchements sont reliés au filtre passe-bande (3).

13. Dispositif selon la revendication 10,
**caractérisé en ce que**
l'élément caractéristique (6) est une mémoire (68).

14. Dispositif selon la revendication 13,
**caractérisé par**
plusieurs résistances (54, 55, 56, 57) commutées par des commutateurs commandés (58, 59, 60, 61) parallèlement à une capacité (52) du filtre passe-bande, qui fait partie du filtre passe-bande (3),
les sorties de commande du microprocesseur (64) sont reliées aux entrées de commande du commutateur commandé (58, 59, 60, 61), et
le microprocesseur (64) est relié à une mémoire (68) dans laquelle est enregistrée la fréquence fondamentale de l'élément oscillant (1).

15. Procédé selon la revendication 7 ou 8 ou le dispositif selon la revendication 12,
**caractérisé en ce que**
la mémoire est une mémoire EEPROM (68).

16. Procédé selon les revendications 1 à 8,
**caractérisé en ce que**
l'élément oscillant (1) est une fourchette oscillante ou une tige oscillante.

17. Procédé selon les revendications 9 à 14,
**caractérisé en ce que**
le capteur (1) est une fourchette oscillante ou une tige oscillante.
